# EUROPEAN PATENT SPECIFICATION

(11) **EP 4 333 144 B1**
(45) Date of publication and mention of the grant of the patent: **25.03.2026**
(21) Application number: 22904563.8
(22) Date of filing: 01.12.2022
(51) Int. Cl.: H01M 10/04, H01M 50/463, H01M 10/0587, H01M 50/107

(54) **JELLY-ROLL TYPE ELECTRODE ASSEMBLY AND SECONDARY BATTERY COMPRISING SAME**
JELLY-ROLL-ELEKTRODENANORDNUNG UND SEKUNDÄRBATTERIE DAMIT
ENSEMBLE ÉLECTRODE DE TYPE ENROULÉ ET BATTERIE SECONDAIRE LE COMPRENANT

(30) Priority: 07.12.2021 KR 20210173898
(43) Date of publication of application: 06.03.2024
(73) Proprietor: LG Energy Solution, Ltd., Seoul 07335 (KR)
(72) Inventor: LEE, Hyejin, Daejeon 34122 (KR)
(74) Representative: Goddar, Heinz J.
(86) International application number: PCT/KR2022/019387
(87) International publication number: WO 2023/106733

(56) References cited:
- JP-A- 2002 343 411
- JP-A- 2009 289 570
- JP-A- 2014 170 664
- JP-A- 2015 008 164
- KR-A- 20150 015 253

## Description

### [Technical Field]

This application claims priority to and the benefit of Korean Patent Application No. 10-2021-0173898 filed with the Korean Intellectual Property Office on December 7, 2021.

The present invention relates to a jelly-roll type electrode assembly and a secondary battery including the same, specifically, to a jelly-roll type electrode assembly including a separator overlapping portion and a cylindrical secondary battery including the same, and more specifically, to a jelly-roll type electrode assembly including a first separator overlapping portion and a second separator overlapping portion, and a cylindrical secondary battery including the same.

### [Background Art]

KR 2015 0015253 A, JP 2002 343411 A, JP 2009 289570 A, JP 2015 008164 A and JP 2014 170664 A disclose a battery having an electrode with the separator configured in different manners.

For a cylindrical battery, a jelly-roll type electrode assembly is manufactured by rolling a long electrode having a prescribed width into a roll form. In a cylindrical battery manufactured by inserting such a jelly-roll type electrode assembly into a battery case, contraction/expansion of the electrode repeatedly occurs during charge and discharge. In particular, when a degree of contraction/expansion of the electrode assembly increases due to a tab (in tab) located in a core of the jelly-roll type electrode assembly or a silicon-based active material added in a negative electrode, a pressure acting on a core part of the electrode assembly greatly increases.

As low-resistance/high-capacity designs increase recently, a jelly-roll type electrode assembly includes a plurality of tabs or a silicon-based active material is added, in many cases. Accordingly, the possibility of deformation of the electrode assembly located in the core part according to contraction/expansion of the electrode assembly increases. In particular, when a separator located between the negative electrode and the positive electrode is damaged, the negative electrode and the positive electrode come into direct contact with each other, causing heat generation and ignition due to an internal short.

In order to solve the problems of the separator damage and internal short caused by the deformation of the electrode assembly, it is necessary to develop a technology capable of protecting the negative electrode and separator in the corresponding region and suppressing the occurrence of the internal short.

### [Detailed Description of the Invention]

### [Technical Problem]

The present invention has been made in an effort to provide a jelly-roll type electrode assembly whose design has been changed, and a secondary battery including the same.

However, the problem to be solved by the present invention is not limited to the above-mentioned problem, and other problems not mentioned will be apparently understood by one skilled in the art from the following description.

### [Technical Solution]

An exemplary embodiment of the present invention includes a jelly-roll type electrode assembly having a negative electrode, a first separator, a positive electrode, and a second separator that are sequentially laminated and wound, wherein the positive electrode has a first surface toward a winding axis of the jelly-roll type electrode assembly, and a second surface opposite to the first surface, wherein the jelly-roll type electrode assembly includes a first separator overlapping portion and a second separator overlapping portion provided of the first surface of the positive electrode and the second surface of the positive electrode, respectively, at one end portion, in a longitudinal direction, of the positive electrode located at a core of the electrode assembly, and wherein, in the first separator overlapping portion and the second separator overlapping portion, the first separator and the second separator are arranged to be overlapped with three or more folds.

Another exemplary embodiment of the present invention provides a secondary battery including the jelly-roll type electrode assembly described above; and a battery case for accommodating the electrode assembly.

### [Advantageous Effects]

The jelly-roll type electrode assembly according to one embodiment of the present invention includes the separator overlapping portion in which a bending structure of a separator at a core part has been changed, thereby preventing damage to the negative electrode and the separator from deformation of the electrode assembly due to contraction/expansion of the electrode during charge and discharge of the battery. In addition, even when the separator is damaged, the separator overlapping portion can prevent an internal short between the positive electrode and the negative electrode to improve the battery stability and the lifetime characteristic.

In addition, in the secondary battery according to the present invention, even when the electrode assembly is deformed due to contraction/expansion of the electrode during charge and discharge of the battery, the separator overlapping portion can prevent an internal short between the positive electrode and the negative electrode to improve the battery stability and the lifetime characteristic.

The effects of the present invention are not limited to the foregoing effects, and effects not mentioned will be apparently understood by one skilled in the art from the present specification and accompanying drawings.

### [Brief Description of Drawings]

FIG. 1 shows a jelly-roll type electrode assembly according to one embodiment of the present invention.
FIG. 2 schematically shows a cross section and a core part of the jelly-roll type electrode assembly according to one embodiment of the present invention.
FIGS. 3 to 6 schematically show separator overlapping portions of the jelly-roll type electrode assembly according to one embodiment of the present invention.
FIGS. 7 to 9 schematically show separator overlapping portions of the jelly-roll type electrode assembly according to one embodiment of the present invention.
FIG. 10 schematically shows a core part including a separator overlapping portion of the jelly-roll type electrode assembly according to one embodiment of the present invention.

### <Explanation of Reference Numerals and Symbols>

1000: jelly-roll type electrode assembly
C: core part
100, 100': negative electrode
101: negative electrode current collector
102, 103: negative electrode active material layer
110: longitudinal end portion of negative electrode
130: negative electrode tab
20: first separator
300: positive electrode
301: positive electrode current collector
302, 303: positive electrode active material layer
310: longitudinal end portion of positive electrode
330: positive electrode tab
40: second separator
50: step portion
60: empty place
S1: first separator overlapping portion
S2: second separator overlapping portion
L, L': spaced distance between longitudinal end portion of step portion and longitudinal end portion of positive electrode
T: thickness of positive electrode
L11, L12: spaced distance between longitudinal end
portion of first separator overlapping portion and longitudinal end portion of positive electrode
L21, L22: spaced distance between longitudinal end portion of second separator overlapping portion and longitudinal end portion of positive electrode
P: piece separator
L13, L14: spaced distance between longitudinal end portion of piece separator included in first separator overlapping portion and longitudinal end portion of positive electrode
L23, L24: spaced distance between longitudinal end portion of piece separator included in second separator overlapping portion and longitudinal end portion of positive electrode

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

One embodiment of the present invention provides a jelly-roll type electrode assembly comprising a negative electrode, a first separator, a positive electrode, and a second separator that are sequentially laminated and wound, wherein the positive electrode has a first surface toward a winding axis of the jelly-roll type electrode assembly and a second surface opposite to the first surface, wherein jelly-roll type electrode assembly includes a first separator overlapping portion and a second separator overlapping portion provided on the first surface of the positive electrode and the second surface of the positive electrode, respectively, at one end portion, in a longitudinal direction, of the positive electrode located at a core of the electrode assembly, and wherein in the first separator overlapping portion and the second separator overlapping portion, the first separator and the second separator are arranged to be overlapped with three or more folds.

The jelly-roll type electrode assembly according to one embodiment of the present invention includes the separator overlapping portion in which a bending structure of a separator at a core part has been changed, thereby preventing damage to the negative electrode and the separator from deformation of the electrode assembly due to contraction/expansion of the electrode during charge and discharge of the battery. In addition, even when the separator is damaged, the separator overlapping portion can prevent an internal short between the positive electrode and the negative electrode to improve the battery stability and the lifetime characteristic.

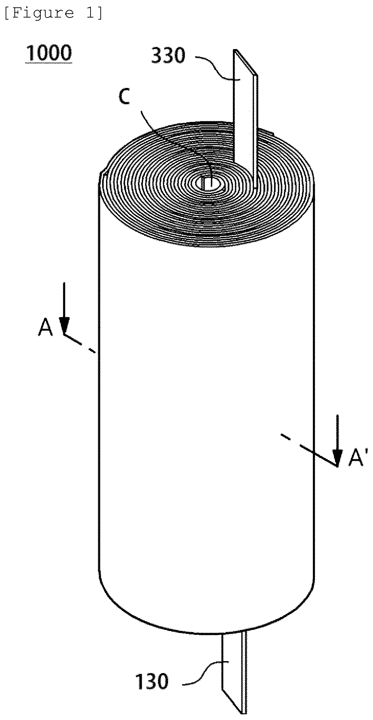

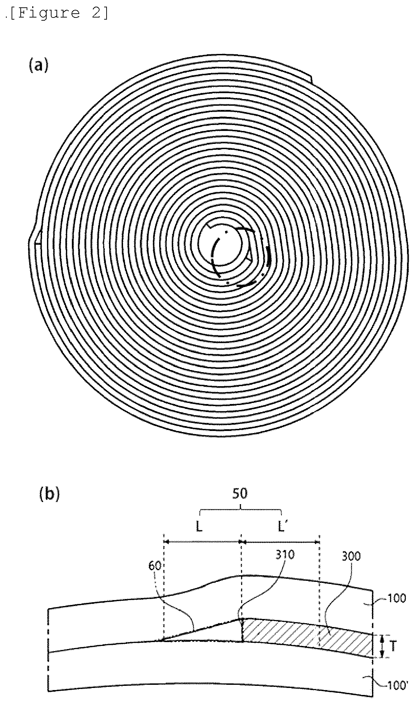

FIG. 1 shows a jelly-roll type electrode assembly according to one embodiment of the present invention, and FIG. 2 schematically shows a cross section and a core part of the jelly-roll type electrode assembly according to one embodiment of the present invention. Specifically, FIG. 2 (a) is a cross-sectional view of the jelly-roll type electrode assembly according to one embodiment of the present invention of FIG. 1, taken along an A-A' direction, and FIG. 2 (b) schematically shows a core part of the electrode assembly.

According to one embodiment of the present invention, at the core part of the electrode assembly, the negative electrode may extend longer than a longitudinal end portion of the positive electrode and may be further wound. Specifically, referring to FIGS. 1 and 2, the negative electrode 100' may extend longer than a longitudinal end portion 310 of the positive electrode and further wound. That is, after the negative electrode 100' is wound by a prescribed length, the negative electrode may be wound together with the positive electrode 300. For example, after the negative electrode 100' is wound around a winding core by one or more turns, the negative electrode may be wound together with the positive electrode 300. That is, at the core part of the jelly-roll type electrode assembly, a longitudinal end portion of the negative electrode may be located on a more inner side than a longitudinal end portion of the positive electrode. In other words, a length and a width of the negative electrode may be greater than those of the positive electrode. When the negative electrode extends longer than the longitudinal end portion of the positive electrode and is further wound, lithium ions can be more easily transferred from the positive electrode to the negative electrode in a chemical reaction of the battery. When the length or width of the negative electrode is formed greater, an area of the negative electrode for receiving lithium ions increases to prevent a decrease in charge/discharge efficiency and to improve the battery stability and the lifetime characteristic. Here, the core part is a region including a hollow portion located on a winding axis of the electrode assembly, and a part of a laminated structure of the wound negative electrode/first separator/positive electrode/second separator, and may refer to a region within 2 turns of the positive electrode from one end portion, in the longitudinal direction, of the positive electrode located on the innermost side of the electrode assembly.

According to one embodiment of the present invention, the core part of the electrode assembly may include a step portion that is a region where the negative electrode covers a longitudinal end portion of the positive electrode. Specifically, the step portion may refer to a region where the negative electrode of the core part covers a longitudinal end portion of the positive electrode at which winding begins, **i.e.,** a region where a step is formed by a thickness of the longitudinal end portion of the positive electrode. The step portion may be such that the negative electrode covers the longitudinal end portion of the positive electrode and a space next to the longitudinal end portion of the positive electrode is empty due to the thickness of the positive electrode. At this time, the step due to the thickness of the positive electrode forms stress in the facing negative electrode, and the stress may be concentrated on a surface opposite to a surface of the negative electrode facing the positive electrode during charge and discharge, thereby causing a negative electrode crack. In addition, the step portion may be a region where damage (core impingement) to the separators and negative electrodes on first and second surfaces of the positive electrode is concentrated due to the sharp longitudinal end portion of the positive electrode when the electrode contracts/expands during charge and discharge of the battery.

Referring to FIG. 2 (b), at the core part (C) of the electrode assembly, a length of the positive electrode 300 may be shorter than the other layers, and an empty space 60 surrounded by the negative electrode 100/the longitudinal end portion 310 of the positive electrode/the negative electrode 100' may be formed. That is, the core part (C) of the jelly-roll type electrode assembly according to one embodiment of the present invention may include a step portion 50 including a region where a laminated structure of the negative electrode 100'/a separator (not shown)/the positive electrode 300/a separator (not shown)/the negative electrode 100 is formed and a region where a laminated structure of the negative electrode 100'/a separator (not shown)/the empty space 60/a separator (not shown)/the negative electrode 100 is formed in a wound state, with respect to the longitudinal end portion 310 of the positive electrode.

According to one embodiment of the present invention, the step portion 50 may include, on one side with respect to the longitudinal end portion 310 of the positive electrode, a region from the longitudinal end portion 310 of the positive electrode to a point at which the negative electrodes 100 and 100' are in direct contact with each other, i.e., a first region having a prescribed length (L) in the longitudinal direction due to the thickness (T) of the positive electrode, and the first region may include the empty space 60 between the negative electrodes 100 and 100'. In addition, the step portion 50 may include a second region having the same length L' in the longitudinal direction as the first region on the other side with respect to the longitudinal end portion 310 of the positive electrode, and the second region may refer to a region including the positive electrode 300 between the negative electrodes 100 and 100'. That is, the step portion 50 may refer to a region having a total length of L+L'=L+L=2L with respect to the longitudinal end portion 310 of the positive electrode.

According to one embodiment of the present invention, the jelly-roll type electrode assembly may include a plurality of separators. For example, the jelly-roll type electrode assembly may have a structure in which a negative electrode/a first separator/a positive electrode/a second separator are sequentially laminated. The separators 20 and 40 serve to separate the negative electrode 100 and the positive electrode 300 and to provide a movement path of lithium ions, in which any separator may be used as the separator without particular limitation as long as the separator is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. In addition, the separator may typically have a thickness of 10 µm or more and 20 µm or less. A separator in which the above-described separator material is used as a base layer and a slurry containing a ceramic component or a polymer material so as to secure heat resistance or mechanical strength is coated on the base layer may be used. The separator having a single layer or multilayer structure may be selectively used.

According to one embodiment of the present invention, the positive electrode may include a first separator overlapping portion and a second separator overlapping portion provided on a first surface of the positive electrode and a second surface of the positive electrode, respectively, at one end portion, in the longitudinal direction, of the positive electrode located at the core part of the electrode assembly. When the first separator overlapping portion and the second separator overlapping portion provided on the first surface of the positive electrode and the second surface of the positive electrode, respectively, are included, damage to the negative electrode and the separator due to the longitudinal end portion of the positive electrode can prevented. In addition, even when the separator is damaged, the separator overlapping portion can prevent an internal short between the positive electrode and the negative electrode to improve the battery stability and the lifetime characteristic.

According to one embodiment of the present invention, in the first separator overlapping portion and the second separator overlapping portion, separators that are arranged overlapped may be in three or more folds. Specifically, in the first separator overlapping portion and the second separator overlapping portion, separators that are arranged overlapped may be in three or more and five or less folds. More specifically, in the first separator overlapping portion and the second separator overlapping portion, separators that are arranged overlapped may be in three, four or five folds. If the separators that are arranged overlapped are in a fold less than three folds, the effect of preventing damage to the negative electrode and the separator may be insufficient. If the separators that are arranged overlapped are in a fold more than five folds, an additional step is formed by a thickness of the separator overlapping portion, so that stress may be concentrated on the corresponding region. Also, additional separator damage may occur or local problems such as lithium precipitation due to lack of electrolyte solution may occur.

According to one embodiment of the present invention, the first separator overlapping portion and the second separator overlapping portion may be defined by the first separator and the second separator extending from a one end portion of the positive electrode and overlapping each other. Specifically, a jelly-roll type electrode assembly according to one embodiment of the present invention may have a negative electrode, a first separator, a positive electrode, and a second separator sequentially laminated and wound, and the positive electrode may have a first surface toward a winding axis of the jelly-roll type electrode assembly and a second surface opposite to the first surface. In this case, the first separator facing the first surface of the positive electrode may extend from the longitudinal end portion of the positive electrode and may be bent, thereby overlapping the second separator on the second surface of the positive electrode to form the second separator overlapping portion. In addition, the second separator facing the second surface of the positive electrode may extend from the longitudinal end portion of the positive electrode and may be bent, thereby overlapping the first separator on the first surface of the positive electrode to form the first separator overlapping portion. In this way, the separators configuring the first separator overlapping portion and the second separator overlapping portion by the simple bending structures of the separators included in the electrode assembly may be in three or more folds. That is, the first separator overlapping portion and the second separator overlapping portion can be formed by the bending structures integrally extending from the first separator and the second separator, without providing a separate additional separator.

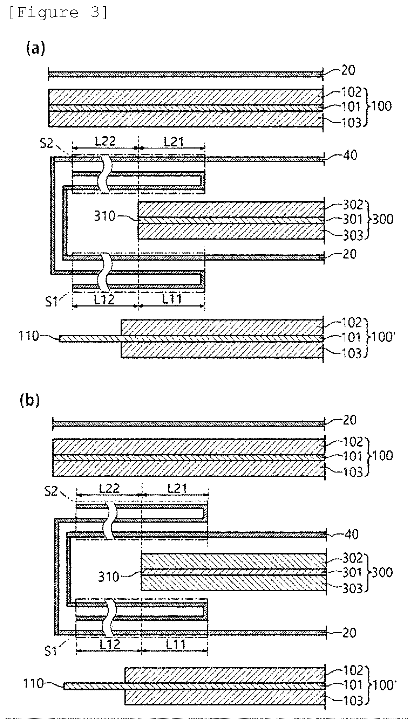

FIGS. 3 to 5 schematically show the separator overlapping portions of the jelly-roll type electrode assembly according to one embodiment of the present invention.

According to one embodiment of the present invention, a longitudinal end portion of the first separator may be bent to surround the longitudinal end portion of the positive electrode and located on the second surface side of the positive electrode, and a longitudinal end portion of the second separator may be bent to surround the bent first separator and located on the first surface side of the positive electrode. Specifically, referring to FIGS. 3 (a), 4 (a) and 5 (a), a longitudinal end portion of the first separator 20 may be bent to surround the longitudinal end portion 310 of the positive electrode and located on the second surface side of the positive electrode 300, and a longitudinal end portion of the second separator 40 may be bent to surround the bent first separator 20 and located on the first surface side of the positive electrode 300. In this way, the first separator 20 may overlap the second separator 40 on the second surface of the positive electrode 300 to form a second separator overlapping portion S2, and the second separator 40 may overlap the first separator 20 on the first surface of the positive electrode 300 to form a first separator overlapping portion S1.

According to one embodiment of the present invention, a longitudinal end portion of the second separator may be bent to surround the longitudinal end portion of the positive electrode and located on the first surface side of the positive electrode, and a longitudinal end portion of the first separator may be bent to surround the bent second separator and located on the second surface side of the positive electrode. Specifically, referring to FIGS. 3 (b), 4 (b) and 5 (b), a longitudinal end portion of the second separator 40 may be bent to surround the longitudinal end portion 310 of the positive electrode and located on the first surface side of the positive electrode 300, and a longitudinal end portion of the first separator 20 may be bent to surround the bent second separator 40 and located on the second surface side of the positive electrode 300. In this way, the second separator 40 may overlap the first separator 20 on the first surface of the positive electrode 300 to form the first separator overlapping portion S1, and the first separator 20 may overlap the second separator 40 on the second surface of the positive electrode 300 to form the second separator overlapping portion S2.

Here, the configuration 'bent to surround A' also includes a case in which a separator facing A is bent and folded back at a position spaced apart from A by a prescribed distance according to a manufacturing process, so that the separator before bending and the separator after bending come into contact with and overlap each other with A interposed therebetween. In other words, the configuration may include a region where the separator before bending and the separator after bending directly contact and overlap each other without interposing A, and a region where the separator before bending and the separator after bending overlap each other with A interposed therebetween. At this time, obviously, a case in which the bent portion of the separator facing A is adjacent to A and the bent portion of the separator is in direct contact with A is also included.

According to one embodiment of the present invention, the first separator overlapping portion may be defined by the first separator and the second separator bent to surround the one end portion of the positive electrode and located on the first surface of the positive electrode and overlapping each other. In other words, the second separator facing the second surface of the positive electrode may extend from the longitudinal end portion of the positive electrode and may be bent to surround the longitudinal end portion of the positive electrode, thereby overlapping the first separator on the first surface of the positive electrode to form the first separator overlapping portion. In this way, it is possible to form a first separator overlapping portion where the separators are in three or more folds by a simpler bending structure.

According to one embodiment of the present invention, the longitudinal end portion of the first separator and the longitudinal end portion of the second separator may be bent and additionally overlapped in a direction facing the positive electrode or in a direction opposite to the direction facing the positive electrode on the first or second surface of the positive electrode. In this case, the bending directions of the longitudinal end portion of the first separator and the longitudinal end portion of the second separator may be different from or the same as each other. In this way, it is possible to adjust the facing direction of the separators overlapping each other by changing the simple bending structure. In addition, the separator may have a coating layer formed on one surface or both surfaces thereof, and roughness of one surface and the other surface may be the same or different. Therefore, adjusting the facing direction of the separators may adjust a friction coefficient between the separator and the separator included in the separator overlapping portion or between the separator and the electrode.

In particular, when a separator having a coating layer formed on one surface is used, it may be easy to adjust the friction coefficient between the separator and the separator or between the separator and the electrode facing each other by changing the bending structure of the separator overlapping portion. In addition, in some cases, as will be described later, when a piece separator having a coating layer formed on one surface or both surfaces thereof is used, it may be easier to adjust the friction coefficient between the separator and the separator or between the separator and the electrode. In this way, it may be possible to prevent damage to the negative electrode and the separator from deformation of the electrode assembly due to contraction/expansion of the electrode during charge and discharge of the battery.

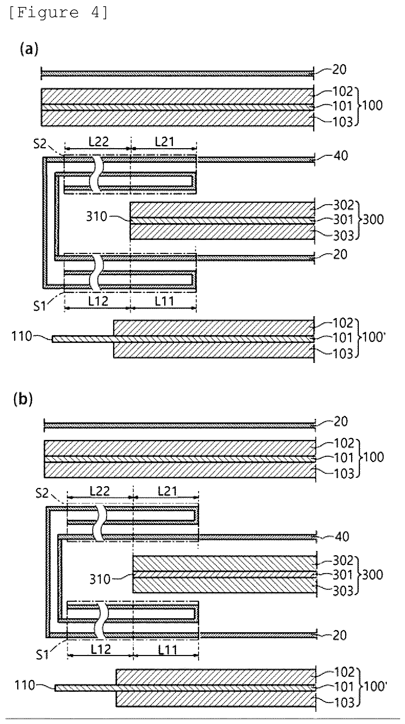

According to one embodiment of the present invention, the longitudinal end portion of the second separator may be bent and additionally overlapped in a direction facing the positive electrode on the first surface of the positive electrode. Specifically, referring to FIG. 4 (b), the first separator overlapping portion S1 may be defined by the first separator 20 and the second separator 40 bent to surround the longitudinal end portion 310 of the positive electrode and located on the first surface of the positive electrode 300 overlap each other, and the longitudinal end portion of the second separator 40 may be bent and additionally overlapped in a direction facing the positive electrode 300, i.e., in a direction away from the winding axis of the jelly-roll type electrode assembly on the first surface of the positive electrode 300.

According to one embodiment of the present invention, the longitudinal end portion of the second separator may be bent and additionally overlapped in a direction opposite to a direction facing the positive electrode on the first surface of the positive electrode. Specifically, referring to FIG. 3 (b), the first separator overlapping portion S1 may be defined by the first separator 20, and the second separator 40 bent to surround the longitudinal end portion 310 of the positive electrode and located on the first surface of the positive electrode 300 overlap each other, and the longitudinal end portion of the second separator 40 may be bent and additionally overlapped in a direction opposite to a direction facing the positive electrode 300, i.e., in a direction toward the winding axis of the jelly-roll type electrode assembly on the first surface of the positive electrode 300.

According to one embodiment of the present invention, the second separator overlapping portion may be defined by the second separator and the first separator bent to surround the longitudinal end portion of the positive electrode and located on the second surface of the positive electrode overlap each other. In other words, the first separator facing the first surface of the positive electrode may extend from the longitudinal end portion of the positive electrode and may be bent to surround the longitudinal end portion of the positive electrode, thereby overlapping the second separator on the second surface of the positive electrode to form the second separator overlapping portion. In this way, it is possible to form the second separator overlapping portion where the separators are in three or more folds by a simpler bending structure.

According to one embodiment of the present invention, the longitudinal end portion of the first separator may be bent and additionally overlapped in a direction facing the positive electrode on the second surface of the positive electrode. Specifically, referring to FIG. 4 (a), the second separator overlapping portion S2 may be formed as the second separator 40 and the first separator 20 bent to surround the longitudinal end portion 310 of the positive electrode and located on the second surface of the positive electrode 300 overlap each other, and the longitudinal end portion of the first separator 20 may be bent and additionally overlapped in a direction facing the positive electrode 300, **i.e.,** in a direction toward the winding axis of the jelly-roll type electrode assembly on the second surface of the positive electrode 300.

According to one embodiment of the present invention, the longitudinal end portion of the first separator may be bent and additionally overlapped in a direction opposite to a direction facing the positive electrode on the second surface of the positive electrode. Specifically, referring to FIG. 3 (a), the second separator overlapping portion S2 may be formed as the second separator 40 and the first separator 20 bent to surround the longitudinal end portion 310 of the positive electrode and located on the second surface of the positive electrode 300 overlap each other, and the longitudinal end portion of the first separator 20 may be bent and additionally overlapped in a direction opposite to a direction facing the positive electrode 300, **i.e.,** in a direction away from the winding axis of the jelly-roll type electrode assembly on the second surface of the positive electrode 300.

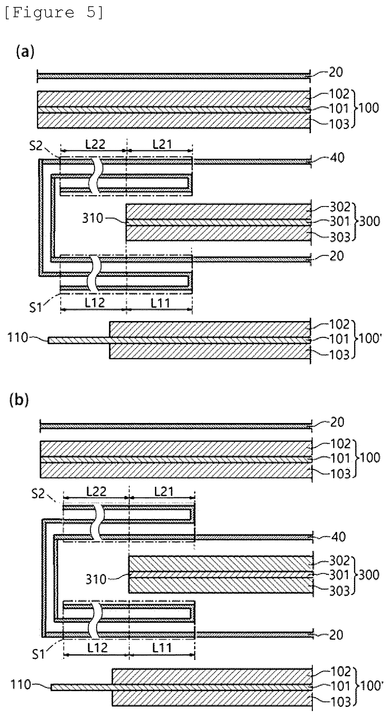

According to one embodiment of the present invention, the longitudinal end portion of the first separator may be bent and additionally overlapped in the direction facing the positive electrode on the second surface of the positive electrode, and the longitudinal end portion of the second separator may be bent and additionally overlapped in the direction opposite to the direction facing the positive electrode on the first surface of the positive electrode. Specifically, referring to FIG. 5 (a), the longitudinal end portion of the first separator 20 may be bent and additionally overlapped in the direction facing the positive electrode 300 on the second surface of the positive electrode 300, thereby forming the second separator overlapping portion S2. The longitudinal end portion of the second separator 40 may be bent and additionally overlapped in the direction opposite to the direction facing the positive electrode 300 on the first surface of the positive electrode 300, thereby forming the first separator overlapping portion S1.

According to one embodiment of the present invention, the longitudinal end portion of the first separator may be bent and additionally overlapped in the direction opposite to the direction facing the positive electrode on the second surface of the positive electrode, and the longitudinal end portion of the second separator may be bent and additionally overlapped in the direction facing the positive electrode on the first surface of the positive electrode. Specifically, referring to FIG. 5 (b), the longitudinal end portion of the first separator 20 may be bent and additionally overlapped in the direction opposite to the direction facing the positive electrode 300 on the second surface of the positive electrode 300, thereby forming the second separator overlapping portion S2. The longitudinal end portion of the second separator 40 may be bent and additionally overlapped in the direction facing the positive electrode 300 on the first surface of the positive electrode 300, thereby forming the first separator overlapping portion S1.

According to one embodiment of the present invention, the first separator overlapping portion S1 and the second separator overlapping portion S2 may each include a region up to a position where the second separator 40 or the first separator 20 is additionally bent, **i.e.,** a region on the first surface or second surface of the positive electrode, with respect to the longitudinal end portion 310 of the positive electrode, and a length of the region on the first surface or second surface may be indicated by L11 or L21.

In addition, the first separator overlapping portion S1 and the second separator overlapping portion S2 may each include a region up to the longitudinal end portion of the second separator 40 or the first separator 20, **i.e., a** region where the first separator overlapping portion and the second separator overlapping portion are not in direct contact with the positive electrode 300, with respect to the longitudinal end portion 310 of the positive electrode, and lengths, in the longitudinal direction, of the regions where the first separator overlapping portion and the second separator overlapping portion are not in direct contact with the positive electrode 300 may be each indicated by L12 or L22.

In this case, a length of the first separator overlapping portion S1 in the longitudinal direction may be L11 + L12, and a length of the second separator overlapping portion S2 in the longitudinal direction may be L21 + L22. The length of the first separator overlapping portion S1 in the longitudinal direction and the length of the second separator overlapping portion S2 in the longitudinal direction may be the same as or different from each other.

According to one embodiment of the present invention, the length of the region of the separator overlapping portion up to a position where the second separator or the first separator is additionally bent, and the length of the region up to the longitudinal end portion of the second separator or the first separator may be the same as or different from each other. That is, the length L11 of the first separator overlapping portion on the first surface of the positive electrode and the length L21 of the second separator overlapping portion on the second surface may be the same as or different from the lengths L12 and L22 of the regions where the first separator overlapping portion and the second separator overlapping portion are not in direct contact with the positive electrode 300, respectively.

According to one embodiment of the present invention, the length, in the longitudinal direction, of the first separator overlapping portion on the first surface of the positive electrode may be 10% or more and 100% or less, on the basis of 100% of a circumference of an inner peripheral surface of the electrode assembly. Specifically, the length L11, in the longitudinal direction, of the first separator overlapping portion on the first surface of the positive electrode may be 10% or more, 20% or more, 30% or more, 40% or more or 50% or more and 100% or less, 90% or less, 80% or less, 70% or less, or 60% or less on the basis of 100% of the circumference of the inner peripheral surface of the electrode assembly.

In addition, the length, in the longitudinal direction, of the first separator overlapping portion on the first surface of the positive electrode may be 1/10 turn or more and 1 turn or less of an inner peripheral surface of the core part of the electrode assembly. Specifically, the length L11, in the longitudinal direction, of the first separator overlapping portion on the first surface of the positive electrode may be 1/10 turn or more, 1/5 turn or more, 1/3 turn or more or 1/2 turn or more and 1 turn or less, 4/5 turn or less, 2/3 turn or less, or 1/2 turn or less of the inner peripheral surface of the core part of the electrode assembly.

When the length range, in the longitudinal direction, of the first separator overlapping portion on the first surface of the positive electrode is satisfied, while it is possible to prevent damage to the negative electrode and the separator, which face the first surface in the direction toward the winding axis of the positive electrode, from deformation of the electrode assembly due to contraction/expansion of the electrode during charge and discharge of the battery, it is possible to prevent a decrease in charge/discharge efficiency due to an excessive decrease in an area of the negative electrode receiving lithium ions, and to improve the battery stability and the lifetime characteristic.

According to one embodiment of the present invention, the length, in the longitudinal direction, of the first separator overlapping portion on the first surface of the positive electrode may be 1 mm or more and 10 mm or less. Specifically, the length L11, in the longitudinal direction, of the first separator overlapping portion on the first surface of the positive electrode may be 1 mm or more, 2 mm or more, 3 mm or more, 4 mm or more, or 5 mm or more, and 10 mm or less, 9 mm or less, 8 mm or less, 7 mm or less, or 6 mm or less. In other words, the first separator overlapping portion may be arranged at a distance of 1 mm or more and 10 mm or less, for example, 3 mm or more and 5 mm or less from the longitudinal end portion 310 of the positive electrode between the positive electrode 300 and the negative electrode 100' facing the first surface of the positive electrode. When the length range, in the longitudinal direction, of the first separator overlapping portion on the first surface of the positive electrode is satisfied, even when there is a process error at a time of introducing the second separator, the first separator overlapping portion can be arranged between the positive electrode and the negative electrode facing the first surface of the positive electrode. Accordingly, it is possible to sufficiently prevent damage to the negative electrode and the separator facing the first surface of the positive electrode.

According to one embodiment of the present invention, the length, in the longitudinal direction, of the second separator overlapping portion on the second surface of the positive electrode may be 10% or more and 100% or less, on the basis of 100% of the circumference of the inner peripheral surface of the electrode assembly. Specifically, the length L21, in the longitudinal direction, of the second separator overlapping portion on the second surface of the positive electrode may be 10% or more, 20% or more, 30% or more, 40% or more or 50% or more and 100% or less, 90% or less, 80% or less, 70% or less, or 60% or less on the basis of 100% of the circumference of the inner peripheral surface of the electrode assembly.

In addition, the length, in the longitudinal direction, of the second separator overlapping portion on the second surface of the positive electrode may be 1/10 turn or more and 1 turn or less of the inner peripheral surface of the core part of the electrode assembly. Specifically, the length L21, in the longitudinal direction, of the second separator overlapping portion on the second surface of the positive electrode may be 1/10 turn or more, 1/5 turn or more, 1/3 turn or more or 1/2 turn or more and 1 turn or less, 4/5 turn or less, 2/3 turn or less, or 1/2 turn or less of the inner peripheral surface of the core part of the electrode assembly.

When the length range, in the longitudinal direction, of the second separator overlapping portion on the second surface of the positive electrode is satisfied, while it is possible to prevent damage to the negative electrode and the separator, which face the second surface in the direction away from the winding axis of the positive electrode, from deformation of the electrode assembly due to contraction/expansion of the electrode during charge and discharge of the battery, it is possible to prevent a decrease in charging/discharging efficiency due to an excessive decrease in an area of the negative electrode receiving lithium ions, and to improve the battery stability and the lifetime characteristic.

According to one embodiment of the present invention, the length, in the longitudinal direction, of the second separator overlapping portion on the second surface of the positive electrode may be 1 mm or more and 10 mm or less. Specifically, the second separator overlapping portion may be arranged at a distance of 1 mm or more and 10 mm or less, for example, 3 mm or more and 5 mm or less from the longitudinal end portion 310 of the positive electrode between the positive electrode 300 and the negative electrode 100 facing the second surface of the positive electrode. When the length range, in the longitudinal direction, of the second separator overlapping portion on the second surface of the positive electrode is satisfied, even when there is a process error at a time of introducing the first separator, the second separator overlapping portion can be arranged between the positive electrode and the negative electrode facing the second surface of the positive electrode. Accordingly, it is possible to sufficiently prevent damage to the negative electrode and the separator facing the second surface of the positive electrode.

According to one embodiment of the present invention, the length of the region where the first separator overlapping portion is not in direct contact with the positive electrode and the length of the region where the second separator overlapping portion is not in direct contact with the positive electrode may be the same as or different from each other, and may be each 50% or more and 500% or less, on the basis of 100% of the circumference of the inner peripheral surface of the electrode assembly. Specifically, the length L12 of the region where the first separator overlapping portion is not in direct contact with the positive electrode and the length L22 of the region where the second separator overlapping portion is not in direct contact with the positive electrode may be the same as or different from each other, and may be each 50% or more, 100% or more, 150% or more, 200% or more, or 250% or more, and 500% or less, 450% or less, 400% or less, 350% or less or 300% or less, on the basis of 100% of the circumference of the inner peripheral surface of the electrode assembly.

In addition, the length of the region where the first separator overlapping portion is not in direct contact with the positive electrode and the length of the region where the second separator overlapping portion is not in direct contact with the positive electrode may be 1/2 turn or more and 5 turns or less of the inner peripheral surface of the core part of the electrode assembly. Specifically, the length L12 of the region where the first separator overlapping portion is not in direct contact with the positive electrode and the length L22 of the region where the second separator overlapping portion is not in direct contact with the positive electrode may be 1/2 turn or more, 1 turn or more, 3/2 turns or more or 2 turns or more and 5 turns or less, 9/2 turns or less, 4 turns or less or 7/2 turns or less of the inner peripheral surface of the core part of the electrode assembly.

When the length range of the region where the first separator overlapping portion is not in direct contact with the positive electrode and the length range of the region where the second separator overlapping portion is not in direct contact with the positive electrode are satisfied, the first separator overlapping portion and the second separator overlapping portions can be arranged between the positive electrode and the negative electrode facing the positive electrode without a separate fixing member, and the first separator overlapping portion and the second separator overlapping portion can be formed using existing equipment without separate equipment, so that the productivity can be improved.

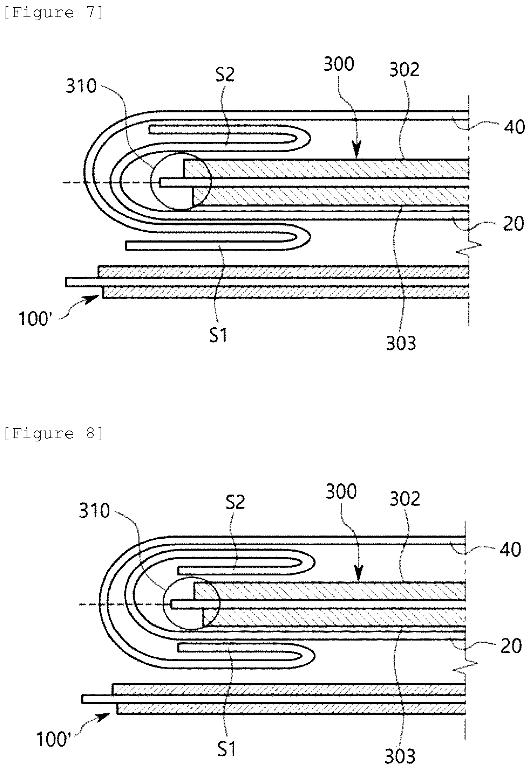

FIGS. 3 to 5 and 7 to 9 schematically show separator overlapping portions of the jelly-roll type electrode assembly according to one embodiment of the present invention. Specifically, FIGS. 3 to 5 schematically show embodiments of the separator overlapping portion, in which the first separator and the second separator have different bending shapes. In addition, FIG. 7 corresponds to FIG. 3 (a), and FIG. 8 schematically shows a separator overlapping portion corresponding to FIG. 4 (a), except the length of the region where the first separator overlapping portion is not in direct contact with the positive electrode, the length of the region where the second separator overlapping portion is not in direct contact with the positive electrode, and the shape of the longitudinal end portion of the positive electrode.

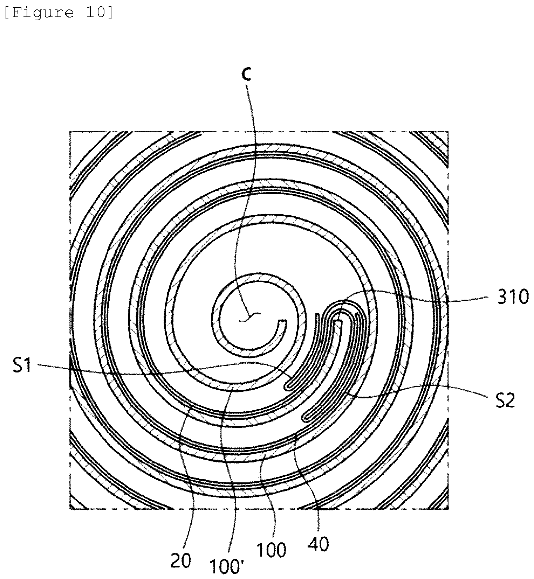

FIG. 10 schematically shows a core part including a separator overlapping portion of the jelly-roll type electrode assembly according to one embodiment of the present invention. Specifically, FIG. 10 schematically shows a core part including a separator overlapping portion of FIG. **7****.**

According to one embodiment of the present invention, the length of the region where the first separator overlapping portion is not in direct contact with the positive electrode and the length of the region where the second separator overlapping portion is not in direct contact with the positive electrode may be the same as or different from each other, and may be each 50% or less, on the basis of 100% of the circumference of the inner peripheral surface of the electrode assembly. Specifically, the length L12 of the region where the first separator overlapping portion is not in direct contact with the positive electrode and the length L22 of the region where the second separator overlapping portion is not in direct contact with the positive electrode may be the same as or different from each other, and may be each 50% or less, 45% or less, 40% or less, 35% or less, or 30% or less, on the basis of 100% of the circumference of the inner peripheral surface of the electrode assembly.

In addition, the length of the region where the first separator overlapping portion is not in direct contact with the positive electrode and the length of the region where the second separator overlapping portion is not in direct contact with the positive electrode may be 1/2 turn or less of the inner peripheral surface of the core part of the electrode assembly. Specifically, the length L12 of the region where the first separator overlapping portion is not in direct contact with the positive electrode and the length L22 of the region where the second separator overlapping portion is not in direct contact with the positive electrode may be 1/2 turn or less, 1/3 turn or less, 1/4 turn or less, or 1/5 turn or less of the inner peripheral surface of the core part of the electrode assembly.

When the ranges of the length of the region where the first separator overlapping portion is not in direct contact with the positive electrode and the length of the region where the second separator overlapping portion is not in direct contact with the positive electrode are satisfied, as will be described later, an additional fixing member may be further included so that the first separator overlapping portion and the second separator overlapping portion can be arranged between the positive electrode and the negative electrode facing the positive electrode, and one side of the first separator overlapping portion and the second separator overlapping portion can be directly fixed on the first surface or second surface of the positive electrode, so that the effect of preventing damage to the negative electrode and the separator facing the first surface or second surface of the positive electrode may be more excellent.

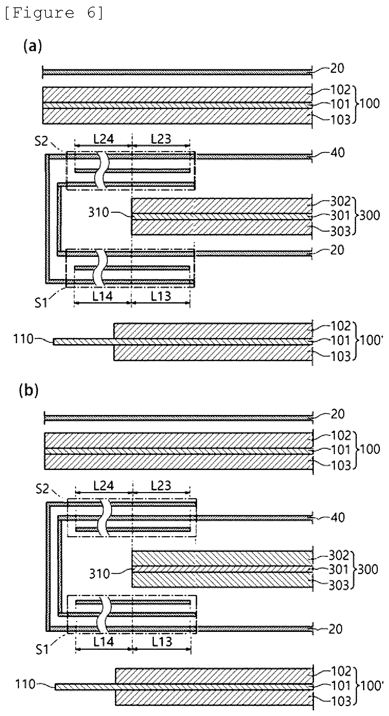

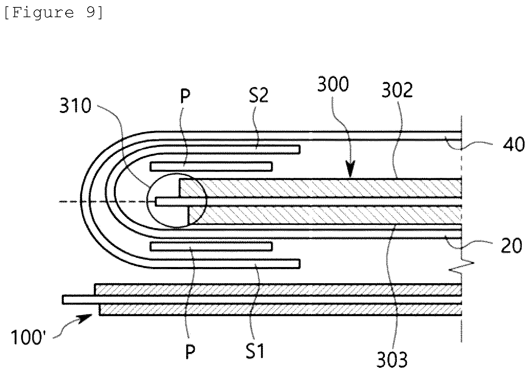

FIGS. 6 and 9 schematically show separator overlapping portions of the jelly-roll type electrode assembly according to one embodiment of the present invention. Specifically, FIG. 6 schematically shows one embodiment of a separator overlapping portion including a piece separator, and FIG. 9 schematically shows a separator overlapping portion corresponding to FIG. 6 (a), except a length of a region where the first separator overlapping portion is not in direct contact with the positive electrode; a length of a region where the second separator overlapping portion is not in direct contact with the positive electrode; and a shape of a longitudinal end portion of the positive electrode.

According to one embodiment of the present invention, at least one of the first separator overlapping portion or the second separator overlapping portion may include a piece separator. Specifically, referring to FIGS. 6 (a) and 6 (b) and FIG. 9, the first separator overlapping portion S1 provided on the first surface of the positive electrode 300 may include the first separator 20 ; and the second separator 40 and a piece separator P extending from the longitudinal end portion of the positive electrode. In addition, the second separator overlapping portion S2 provided on the second surface of the positive electrode 300 may include the second separator 40; and the first separator 20 and a piece separator P extending from the longitudinal end portion of the positive electrode. When at least one of the first separator overlapping portion or the second separator overlapping portion includes a piece separator, the separators configuring the separator overlapping portion can be more simply adjusted to be in three or more folds. When a coating layer is formed on one surface or both surfaces of the piece separator, it is possible to more easily adjust the friction coefficient between the separator and the separator included in the separator overlapping portion or between the separator and the positive electrode.

According to one embodiment of the present invention, the first separator overlapping portion S1 and the second separator overlapping portion S2 may each include a region up to one end portion, in the longitudinal direction, of the piece separator P with respect to the longitudinal end portion 310 of the positive electrode, and lengths of the regions in the longitudinal direction may be indicated by L13 and L23, respectively. In addition, each of the first separator overlapping portion S1 and the second separator overlapping portion S2 may each include a region up to the other end portion, in the longitudinal direction, of the piece separator P with respect to the longitudinal end portion 310 of the positive electrode, and lengths of the regions in the longitudinal direction may be indicated by L14 and L24, respectively. L13 and L14, and L23 and L24 may be the same as or different from each other, a length, in the longitudinal direction, of the piece separator included in the first separator overlapping portion S1 may be L13 + L14, and a length, in the longitudinal direction, of the piece separator included in the second separator overlapping portion S2 may be L23 + L24.

In addition, L13 and L23 may be the same as or different from L11 and L21, respectively, L14 and L24 may be the same as or different from L12 and L22, respectively, the length, in the longitudinal direction, of the first separator overlapping portion S1 may be the same as or different from the length (L13+L14), in the longitudinal direction, of the piece separator P included in the first separator overlapping portion S1, and the length, in the longitudinal direction, of the second separator overlapping portion S2 may be the same as or different from the length (L23+L24), in the longitudinal direction, of the piece separator P included in the second separator overlapping portion S2.

According to one embodiment of the present invention, the length, in the longitudinal direction, of the piece separator included in the first separator overlapping portion S1 may be 5 mm or more and 50 mm or less. When the range of the length (L13+L14) of the piece separator P in in the longitudinal direction is satisfied, while it is possible to prevent damage to the negative electrode and the separator, which face the first surface in the direction toward the winding axis of the positive electrode, from deformation of the electrode assembly due to contraction/expansion of the electrode during charge and discharge of the battery, it is possible to prevent a decrease in charging/discharging efficiency due to an excessive decrease in an area of the negative electrode receiving lithium ions, and to improve the battery stability and the lifetime characteristic.

According to one embodiment of the present invention, the length, in the longitudinal direction, of the piece separator included in the second separator overlapping portion S2 may be 5 mm or more and 50 mm or less. When the range of the length (L23+L24) of the piece separator P in the longitudinal direction is satisfied, while it is possible to prevent damage to the negative electrode and the separator, which face the second surface in the direction away from the winding axis of the positive electrode, from deformation of the electrode assembly due to contraction/expansion of the electrode during charge and discharge of the battery, it is possible to prevent a decrease in charging/discharging efficiency due to an excessive decrease in an area of the negative electrode receiving lithium ions, and to improve the battery stability and the lifetime characteristic.

According to one embodiment of the present invention, at least one of the first separator overlapping portion or the second separator overlapping portion may further include a fixing member provided on one side. The fixing member is not limited as long as it can fix the first separator overlapping portion or the second separator overlapping portion on the first surface or second surface of the positive electrode. The fixing member may be, for example, a tape having an adhesive layer provided on at least one surface of a base layer, or an adhesive layer. The use of a tape having an adhesive layer provided on one surface of a base layer is more suitable for a roll-to-roll process, which can improve processability.

According to one embodiment of the present invention, a length of the fixing member in a width direction may be 15% or more and 100% or less on the basis of 100% of a length of the positive electrode in the width direction. Specifically, the length of the fixing member in the width direction may be 30% or more or 50% or more and 80% or less or 60% or less, for example, 10 mm or more and 65 mm or less, on the basis of 100% of the length of the positive electrode in the width direction. In addition, a length of the fixing member in the longitudinal direction may be 5 mm or more and 30 mm or less, for example, 5 mm or more and 15 mm or less, 10 mm or more and 20 mm or less, or 15 mm or more and 30 mm or less. When the length range of the fixing member is satisfied, the first separator overlapping portion and the second separator overlapping portion may be easily arranged between the positive electrode and the negative electrode facing the positive electrode.

According to one embodiment of the present invention, the positive electrode may include a positive electrode current collector and a positive electrode active material layer provided on the positive electrode current collector. Specifically, referring to FIG. 3, the positive electrode 300 may include a positive electrode current collector 301 and positive electrode active material layers 302 and 303 formed on one surface or both surfaces of the positive electrode current collector 301 and including a positive electrode active material. In other words, the positive electrode active material layer is formed on a positive electrode coating portion of the positive electrode current collector, and a surface not provided with the positive electrode active material layer may be referred to as a positive electrode uncoated portion.

According to one embodiment of the present invention, the positive electrode current collector may include a positive electrode coating portion coated with a positive electrode active material and a positive electrode uncoated portion not coated with the positive electrode active material, and may include a tab on the positive electrode uncoated portion. Specifically, the positive electrode current collector may include a positive electrode uncoated portion, and may include a positive electrode tab 330 formed on the positive electrode uncoated portion.

According to one embodiment of the present invention, the positive electrode may include a positive electrode current collector; and a positive electrode active material layer provided on at least one surface of the first surface and the second surface of the positive electrode current collector, and wherein an end of the one end portion is at a same position as an end of the positive electrode current collector. Specifically, referring to FIGS. 3 to 6, the positive electrode 300 may include a positive electrode current collector 301; and positive electrode active material layers 302 and 303 provided on at least one surface of the positive electrode current collector 301 and each having a longitudinal end portion 310 at the same position as an end of the positive electrode current collector 301. In other words, one end portion 310, in the longitudinal direction, of the positive electrode may have a free-edge form. In this way, it is possible to reduce an unnecessary uncoated portion area of the positive electrode current collector, thereby securing economic efficiency. In addition, since a slitting process may be performed after forming an active material layer on an electrode, the roll-to-roll process including the slitting process and the winding process may be performed more efficiently. Here, the description 'same position' means that the end portions in the longitudinal direction are the same, and may include a case where the end portions are formed at substantially the same positions due to a process error that may occur in the slitting process or the like.

According to one embodiment of the present invention, the positive electrode may include a positive electrode current collector; and a positive electrode active material layer provided on at least one surface of the first surface and the second surface of the positive electrode current collector, and wherein an end of the one end portion is not at a same position as an end of the positive electrode current collector. Specifically, referring to FIGS. 7 to 9, the positive electrode 300 may include a positive electrode current collector 301; and positive electrode active material layers 302 and 303 provided on at least one surface of the positive electrode current collector 301 and not having a longitudinal end portion 310 at the same position as an end of the positive electrode current collector 301.

According to one embodiment of the present invention, the positive electrode current collector is not particularly limited as long as it has conductivity without inducing a chemical change in the battery. Specifically, for example, for the positive electrode current collector, stainless steel, aluminum, nickel, titanium, fired carbon, aluminum or stainless steel each surface treated with carbon, nickel, titanium, silver, or the like, or the like may be used. That is, the positive electrode current collector may be provided in the form of surface-treated stainless steel, an aluminum foil or the like.

In addition, the positive electrode current collector may typically have a thickness of 3 to 50 µm, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

According to one embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}0₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to one embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

According to one embodiment of the present invention, the negative electrode may include a negative electrode current collector and a negative electrode active material layer provided on the negative electrode current collector. Specifically, referring to FIG. 3, the negative electrode 100 may include a negative electrode current collector 101 and negative electrode active material layers 102 and 103 formed on one surface or both surfaces of the negative electrode current collector 101 and including a negative electrode active material. In other words, the negative electrode active material layer is formed on a negative electrode coating portion of the negative electrode current collector, and a surface not provided with the negative electrode active material layer may be referred to as a negative electrode uncoated portion.

According to one embodiment of the present invention, the negative electrode current collector may include a negative electrode coating portion coated with a negative electrode active material layer and a negative electrode uncoated portion not coated with the negative electrode active material layer, and may include a tab on the negative electrode uncoated portion. Specifically, the negative electrode current collector may include a negative electrode uncoated portion, and may include a negative electrode tab 130 formed on the negative electrode uncoated portion. Accordingly, the manufactured electrode assembly may include one or more negative electrode tabs.

According to one embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and for the negative electrode active material, the negative electrode conductive material, and the negative electrode binder, materials that are used in the art may be used without limitation.

According to one embodiment of the present invention, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. A thickness of the negative electrode current collector may be 6 µm or more and 80 µm or less. However, the thickness of the negative electrode current collector is not limited thereto.

According to one embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to one embodiment of the present invention, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

One embodiment of the present invention provides a secondary battery including the jelly-roll type electrode assembly described above; and a battery case configured to accommodate the electrode assembly. Specifically, the secondary battery may include the electrode assembly according to one embodiment described above and a battery case for accommodating the electrode assembly.

According to one embodiment of the present invention, the battery case may have a cylindrical shape. Specifically, the battery case may have a cylindrical, prismatic, or pouch shape depending on use applications. However, the battery case having a cylindrical shape may be more suitable for accommodating a jelly-roll type electrode assembly. When the battery case has a cylindrical shape, a shape of a secondary battery including the jelly-roll type electrode assembly and a battery case for accommodating the electrode assembly may have a cylindrical shape.

In the secondary battery according to the present invention, even when the electrode assembly is deformed due to contraction/expansion of the electrode during charge and discharge of the battery, the separator overlapping portion can prevent an internal short between the positive electrode and the negative electrode to improve the battery stability and the lifetime characteristic.

According to one embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to one embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to one embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to one embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified by the person skilled in the art. The scope of the invention is defined by the appendend claims.

## Claims

1. A jelly-roll type electrode assembly comprising a negative electrode, a first separator, a positive electrode, and a second separator that are sequentially laminated and wound,
wherein the positive electrode has a first surface toward a winding axis of the jelly-roll type electrode assembly, and a second surface opposite to the first surface,
wherein the jelly-roll type electrode assembly comprises a first separator overlapping portion and a second separator overlapping portion provided on the first surface of the positive electrode and the second surface of the positive electrode, respectively, at one end portion, in a longitudinal direction, of the positive electrode located at a core of the electrode assembly, and
**characterised in that**
in the first separator overlapping portion and the second separator overlapping portion, the first separator and the second separator are arranged to be overlapped with three or more folds.

2. The jelly-roll type electrode assembly of claim 1, wherein the first separator overlapping portion and the second separator overlapping portion are defined by the first separator and the second separator extending from the one end portion of the positive electrode and overlapping each other.

3. The jelly-roll type electrode assembly of claim **2,** wherein a longitudinal end portion of the first separator is bent to surround the one end portion of the positive electrode and is located on a side of the positive electrode having the second surface, and
wherein a longitudinal end portion of the second separator is bent to surround the longitudinal end portion of the first separator and is located on a side of the positive electrode having the first surface.

4. The jelly-roll type electrode assembly of claim **2,** wherein a longitudinal end portion of the second separator is bent to surround the one end portion of the positive electrode and is located on a side of the positive electrode having the first surface, and
wherein a longitudinal end portion of the first separator is bent to surround the longitudinal end portion of the second separator and is located on a side of the positive electrode having the second surface.

5. The jelly-roll type electrode assembly of claim 1, wherein the first separator overlapping portion is defined by the first separator, and the second separator bent to surround the one end portion of the positive electrode and located on the first surface of the positive electrode and overlapping each other.

6. The jelly-roll type electrode assembly of claim 5, wherein a longitudinal end portion of the second separator is bent and additionally overlapped in a direction facing the positive electrode on the first surface of the positive electrode.

7. The jelly-roll type electrode assembly of claim 5, wherein a longitudinal end portion of the second separator is bent and additionally overlapped in a direction opposite to a direction facing the positive electrode on the first surface of the positive electrode.

8. The jelly-roll type electrode assembly of claim 1, wherein the second separator overlapping portion is defined by the second separator, and the first separator bent to surround the one end portion of the positive electrode and located on the second surface of the positive electrode are overlapping each other.

9. The jelly-roll type electrode assembly of claim 8, wherein a longitudinal end portion of the first separator is bent and additionally overlapped in a direction facing the positive electrode on the second surface of the positive electrode.

10. The jelly-roll type electrode assembly of claim 8, wherein a longitudinal end portion of the first separator is bent and additionally overlapped in a direction opposite to a direction facing the positive electrode on the second surface of the positive electrode.

11. The jelly-roll type electrode assembly of claim 1, wherein at least one of the first separator overlapping portion or the second separator overlapping portion comprises a piece separator.

12. The jelly-roll type electrode assembly of claim 1, wherein at least one of the first separator overlapping portion or the second separator overlapping portion further comprises a fixing member provided on one side.

13. The jelly-roll type electrode assembly of claim 1, wherein the positive electrode comprises:
a positive electrode current collector; and
a positive electrode active material layer provided on at least one surface of the first surface and the second surface of the positive electrode current collector, and
wherein an end of the one end portion is at a same position as an end of the positive electrode current collector.

14. A secondary battery comprising:
the jelly-roll type electrode assembly according to any one of Claims 1 to 13; and
a battery case configured to accommodate the electrode assembly.

15. The secondary battery of claim 14, wherein the battery case has a cylindrical shape.

## Patentansprüche

1. Elektrodenanordnung vom Jellyroll-Typ, umfassend eine negative Elektrode, einen ersten Separator, eine positive Elektrode und einen zweiten Separator, die sequentiell laminiert und gewickelt sind,
wobei die positive Elektrode eine erste Oberfläche in Richtung einer Wickelachse der Elektrodenanordnung vom Jellyroll-Typ und eine zweite Oberfläche gegenüber der ersten Oberfläche aufweist,
wobei die Elektrodenanordnung vom Jellyroll-Typ einen ersten Separatorüberlappungsabschnitt und einen zweiten Separatorüberlappungsabschnitt umfasst, die auf der ersten Oberfläche der positiven Elektrode bzw. der zweiten Oberfläche der positiven Elektrode an einem Endabschnitt der positiven Elektrode, der sich an einem Kern der Elektrodenanordnung befindet, in einer Längsrichtung bereitgestellt sind, und
**dadurch gekennzeichnet, dass** in dem ersten Separatorüberlappungsabschnitt und dem zweiten Separatorüberlappungsabschnitt der erste Separator und der zweite Separator so angeordnet sind, dass sie sich mit drei oder mehr Falten überlappen.

2. Elektrodenanordnung vom Jellyroll-Typ nach Anspruch 1,
wobei der erste Separatorüberlappungsabschnitt und der zweite Separatorüberlappungsabschnitt durch den ersten Separator und den zweiten Separator definiert sind, die sich von dem einen Endabschnitt der positiven Elektrode erstrecken und einander überlappen.

3. Elektrodenanordnung vom Jellyroll-Typ nach Anspruch 2, wobei ein Längsendabschnitt des ersten Separators gebogen ist, um den einen Endabschnitt der positiven Elektrode zu umgeben, und sich auf einer Seite der positiven Elektrode befindet, die die zweite Oberfläche aufweist, und
wobei ein Längsendabschnitt des zweiten Separators gebogen ist, um den Längsendabschnitt des ersten Separators zu umgeben, und sich auf einer Seite der positiven Elektrode befindet, die die erste Oberfläche aufweist.

4. Elektrodenanordnung vom Jellyroll-Typ nach Anspruch 2, wobei ein Längsendabschnitt des zweiten Separators gebogen ist, um den einen Endabschnitt der positiven Elektrode zu umgeben, und sich auf einer Seite der positiven Elektrode befindet, die die erste Oberfläche aufweist, und
wobei ein Längsendabschnitt des ersten Separators gebogen ist, um den Längsendabschnitt des zweiten Separators zu umgeben, und sich auf einer Seite der positiven Elektrode befindet, die die zweite Oberfläche aufweist.

5. Elektrodenanordnung vom Jellyroll-Typ nach Anspruch 1, wobei der erste Separatorüberlappungsabschnitt durch den ersten Separator und den zweiten Separator definiert ist, die gebogen sind, um den einen Endabschnitt der positiven Elektrode zu umgeben, und sich auf der ersten Oberfläche der positiven Elektrode befinden und einander überlappen.

6. Elektrodenanordnung vom Jellyroll-Typ nach Anspruch 5, wobei ein Längsendabschnitt des zweiten Separators gebogen ist und zusätzlich in einer Richtung überlappt, die der positiven Elektrode auf der ersten Oberfläche der positiven Elektrode zugewandt ist.

7. Elektrodenanordnung vom Jellyroll-Typ nach Anspruch 5, wobei ein Längsendabschnitt des zweiten Separators gebogen ist und zusätzlich in einer Richtung entgegengesetzt zu einer Richtung überlappt, die der positiven Elektrode auf der ersten Oberfläche der positiven Elektrode zugewandt ist.

8. Elektrodenanordnung vom Jellyroll-Typ nach Anspruch 1, wobei der zweite Separatorüberlappungsabschnitt durch den zweiten Separator und den ersten Separator definiert ist, die gebogen sind, um den einen Endabschnitt der positiven Elektrode zu umgeben, und sich auf der zweiten Oberfläche der positiven Elektrode befinden und einander überlappen.

9. Elektrodenanordnung vom Jellyroll-Typ nach Anspruch 8, wobei ein Längsendabschnitt des ersten Separators gebogen ist und zusätzlich in einer Richtung überlappt, die der positiven Elektrode auf der zweiten Oberfläche der positiven Elektrode zugewandt ist.

10. Elektrodenanordnung vom Jellyroll-Typ nach Anspruch 8, wobei ein Längsendabschnitt des ersten Separators gebogen ist und zusätzlich in einer Richtung entgegengesetzt zu einer Richtung überlappt, die der positiven Elektrode auf der zweiten Oberfläche der positiven Elektrode zugewandt ist.

11. Elektrodenanordnung vom Jellyroll-Typ nach Anspruch 1, wobei mindestens einer des ersten Separatorüberlappungsabschnitts oder des zweiten Separatorüberlappungsabschnitts einen Stückseparator umfasst.

12. Elektrodenanordnung vom Jellyroll-Typ nach Anspruch 1, wobei mindestens einer des ersten Separatorüberlappungsabschnitts oder des zweiten Separatorüberlappungsabschnitts ferner ein Befestigungselement umfasst, das auf einer Seite bereitgestellt ist.

13. Elektrodenanordnung vom Jellyroll-Typ nach Anspruch 1, wobei die positive Elektrode Folgendes umfasst:
einen Stromabnehmer der positiven Elektrode; und
eine Positivelektrode-Aktivmaterialschicht, die auf mindestens einer Oberfläche der ersten Oberfläche und der zweiten Oberfläche des Stromabnehmers der positiven Elektrode bereitgestellt ist, und
wobei sich ein Ende des einen Endabschnitts an einer gleichen Position wie ein Ende des Positivelektrode-Stromabnehmers befindet.

14. Sekundärbatterie, umfassend:
die Elektrodenanordnung vom Jellyroll-Typ nach einem der Ansprüche 1 bis 13; und
ein Batteriegehäuse, das konfiguriert ist, um die Elektrodenanordnung aufzunehmen.

15. Sekundärbatterie nach Anspruch 14, wobei das Batteriegehäuse eine zylindrische Form aufweist.

## Revendications

1. Ensemble électrode de type roulé comprenant une électrode négative, un premier séparateur, une électrode positive et un deuxième séparateur qui sont stratifiés et enroulés séquentiellement,
dans lequel l'électrode positive a une première surface vers un axe d'enroulement de l'ensemble électrode de type roulé et une deuxième surface opposée à la première surface,
dans lequel l'ensemble électrode de type roulé comprend une partie de chevauchement du premier séparateur et une partie de chevauchement du deuxième séparateur fournies sur la première surface de l'électrode positive et la deuxième surface de l'électrode positive, respectivement, à une partie d'extrémité, dans une direction longitudinale, de l'électrode positive située au centre de l'ensemble électrode, et
**caractérisé en ce que**, dans la partie de chevauchement du premier séparateur et la partie de chevauchement du deuxième séparateur, le premier séparateur et le deuxième séparateur sont disposés pour se chevaucher de trois plis ou plus.

2. Ensemble électrode de type roulé selon la revendication 1,
dans lequel la partie de chevauchement du premier séparateur et la partie de chevauchement du deuxième séparateur sont définies par le premier séparateur et le deuxième séparateur qui s'étendent de ladite partie d'extrémité de l'électrode positive et se chevauchent.

3. Ensemble électrode de type roulé selon la revendication 2, dans lequel une partie d'extrémité longitudinale du premier séparateur est repliée pour entourer ladite partie d'extrémité de l'électrode positive et est située sur un côté de l'électrode positive ayant la deuxième surface, et
dans lequel une partie d'extrémité longitudinale du deuxième séparateur est repliée pour entourer la partie d'extrémité longitudinale du premier séparateur et est située sur un côté de l'électrode positive ayant la première surface.

4. Ensemble électrode de type roulé selon la revendication 2, dans lequel une partie d'extrémité longitudinale du deuxième séparateur est repliée pour entourer ladite partie d'extrémité de l'électrode positive et est située sur un côté de l'électrode positive ayant la première surface, et
dans lequel une partie d'extrémité longitudinale du premier séparateur est repliée pour entourer la partie d'extrémité longitudinale du deuxième séparateur et est située sur un côté de l'électrode positive ayant la deuxième surface.

5. Ensemble électrode de type roulé selon la revendication 1, dans lequel la partie de chevauchement du premier séparateur est définie par le premier séparateur et le deuxième séparateur repliés pour entourer ladite partie d'extrémité de l'électrode positive et situés sur la première surface de l'électrode positive et qui se chevauchent.

6. Ensemble électrode de type roulé selon la revendication 5, dans lequel une partie d'extrémité longitudinale du deuxième séparateur est repliée et chevauchée en plus dans une direction face à l'électrode positive sur la première surface de l'électrode positive.

7. Ensemble électrode de type roulé selon la revendication 5, dans lequel une partie d'extrémité longitudinale du deuxième séparateur est repliée et chevauchée en plus dans une direction opposée à une direction face à l'électrode positive sur la première surface de l'électrode positive.

8. Ensemble électrode de type roulé selon la revendication 1, dans lequel la partie de chevauchement du deuxième séparateur est définie par le deuxième séparateur et le premier séparateur repliés pour entourer ladite partie d'extrémité de l'électrode positive et situés sur la deuxième surface de l'électrode positive qui se chevauchent.

9. Ensemble électrode de type roulé selon la revendication 8, dans lequel une partie d'extrémité longitudinale du premier séparateur est repliée et chevauchée en plus dans une direction face à l'électrode positive sur la deuxième surface de l'électrode positive.

10. Ensemble électrode de type roulé selon la revendication 8, dans lequel une partie longitudinale du premier séparateur est repliée et chevauchée en plus dans une direction opposée à une direction face à l'électrode positive sur la deuxième surface de l'électrode positive.

11. Ensemble électrode de type roulé selon la revendication 1, dans lequel soit la partie de chevauchement du premier séparateur, soit la partie de chevauchement du deuxième séparateur comprend un séparateur de pièces.

12. Ensemble électrode de type roulé selon la revendication 1, dans lequel soit la partie de chevauchement du premier séparateur, soit la partie de chevauchement du deuxième séparateur comprend en outre un élément de fixation fourni sur un côté.

13. Ensemble électrode de type roulé selon la revendication 1, dans lequel l'électrode positive comprend :
un collecteur de courant d'électrode positive ; et
une couche de matériau actif d'électrode positive fournie sur soit la surface de la première surface, soit la deuxième surface du collecteur de courant d'électrode positive, et
dans lequel une extrémité de ladite partie d'extrémité est à une position identique à une extrémité du collecteur de courant d'électrode positive.

14. Batterie rechargeable comprenant :
l'ensemble électrode de type roulé selon l'une quelconque des revendications 1 à 13 ; et
un boîtier de batterie configuré pour loger l'ensemble électrode.

15. Batterie rechargeable selon la revendication 14, dans laquelle le boîtier de batterie a une forme cylindrique.
